(19) Europäisches Patentamt
European Patent Office
Office européen des brevets

(11) **EP 2 530 647 A1**

(12) **EUROPEAN PATENT APPLICATION**

(43) Date of publication:
05.12.2012 Bulletin 2012/49

(51) Int Cl.:
*G06T 7/00* (2006.01)

(21) Application number: 11168355.3

(22) Date of filing: 01.06.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Harman Becker Automotive Systems GmbH
76307 Karlsbad (DE)

(72) Inventors:
• **Natroshvili, Koba**
76337 Waldbronn (DE)

• **Scholl, Kay-Ulrich**
76307 Karlsbad (DE)
• **Quast, Johannes**
76133 Karlsruhe (DE)

(74) Representative: **Bertsch, Florian Oliver**
**Kraus & Weisert**
**Patent- und Rechtsanwälte**
**Thomas-Wimmer-Ring 15**
**80539 München (DE)**

(54) **Method of calibrating a vehicle vision system and vehicle vision system**

(57) A vehicle vision system comprises a plurality of image sensors (11-14) which respectively capture images having a non-linear distortion. In order to calibrate the vehicle vision system, an image of a plurality (22) of objects is captured using an image sensor (11) and a further image of the plurality (22) of objects is captured using a further image sensor (13). The image sensor (11) and the further image sensor (13) have overlapping fields of view (15, 17). A position and orientation of the image sensor (11) relative to the plurality (20) of objects is determined based on the captured image. A position and orientation of the further image sensor (13) relative to the plurality (22) of objects is determined based on the captured further image. A relative position and orientation between the further image sensor (13) and the image sensor (11) is established based on a result of the determining.

Fig. 1

EP 2 530 647 A1

**Description**

Field of the Invention

The invention relates to a method of calibrating a vehicle vision system and to a vehicle vision system. The invention relates in particular to such a method and vision system in which parameters of the camera system required for combining images captured with different cameras may be established.

Related Art

The integration of image sensors in vehicular systems has become more and more widely used. Such image sensors may be used as components of a driver assist system in which the image sensors capture images of the vehicle environment. The captured images may be processed to perform object recognition and/or may be displayed, possibly after processing, to a user. Automatic warning and assist functions may be performed to warn the driver of potentially dangerous situations or to actively control operation of a vehicle by actuating the break or similar. Image sensors may also be employed as rear view or side view cameras which help the driver with parking the vehicle or other critical operations.

With the use of image sensors in vehicular applications becoming increasingly widespread, plural image sensors may be provided so as to capture images of a vehicle surrounding which, in combination, provide information on the environment over the full 360˚ angular range surrounding the vehicle. In order to avoid excessive numbers of image sensors, it is desirable to use image sensors having a field of view with a large lateral opening angle.

When data captured by different image sensors are to be combined with each other, the parameters of the camera system must be known. To this end, a calibration may be performed to establish extrinsic and intrinsic parameters of each camera. Approaches for calibration of cameras include techniques which require that a marker is positioned in the vehicle reference frame at a position which is known with high precision a priori. Such approaches may suffer from inaccuracies due to error propagation resulting from inaccurate positioning of the marker. High accuracy results may be time-consuming and costly to attain. Other approaches for camera calibration include the tracking of objects as the objects move relative to the vehicle. In many of these approaches, the calibration is performed in a one by one fashion separately for each camera.

Still other approaches for calibration of camera systems include overlapping field of view (FOV) techniques. Implementations of such approaches also frequently require that a marker is positioned at a pre-defined position relative to the vehicle with a high accuracy.

There is a continued need in the art for a method of calibrating a vehicle vision system and for a vehicle vision system in which the calibration does not require the position of markers in the vehicle frame of reference to be known a priori. There is also a need in the art for such a method and such a vehicle vision system which allows cameras with fields of view having large lateral opening angles to be used.

Summary

This need is addressed by a method and vehicle vision system as recited in the independent claims. The dependent claims describe embodiments. According to an aspect, a method of calibrating a vehicle vision system is provided. The vehicle vision system comprises a plurality of image sensors which respectively capture images having a non-linear distortion, in particular a fish-eye distortion. The image sensors are provided at different locations on the vehicle. The method comprises capturing, determining and establishing steps performed for a pair of image sensors including an image sensor and a further image sensor of the plurality of image sensors. In the method, an image of a plurality of objects is captured using the image sensor, and a further image of the plurality of objects is captured using the further image sensor. The plurality of objects are positioned in an overlap region of a field of view of the image sensor and a field of view of the further image sensor. A position and orientation of the image sensor relative to the plurality of objects is determined based on the captured image, and a position and orientation of the further image sensor relative to the plurality of objects is determined based on the captured further image. A relative position and orientation between the further image sensor and the image sensor is established based on a result of the determining step.

In the method, a relative position and orientation between image sensors are determined based on images of the plurality of objects positioned in an overlap region of fields of view (FOVs). It is not required to know the position of the plurality of objects relative to the vehicle a priori in order to determine the relative positions of image sensors. The image sensor and the further image sensor are different image sensors.

The image sensors are configured such that they capture images having a non-linear distortion. This allows the image sensors to be configured with optical components which allow the image sensors to have a wide FOV. A small number of image sensors, such as four image sensors, may be sufficient to capture a surround view covering the full 360° angular range surrounding the vehicle. An opening angle of the FOV of the image sensors in a lateral direction may be at least 170° or at least 175°.

The positions of the plurality of objects relative to each other are known. These pre-determined relative positions may be used to determine the position and orientation of the image sensor and of the further image sensor relative to the plurality of objects. The plurality of objects may be dedicated markers, such as checkerboard patterns arranged in a trihedral arrangement.

The plurality of objects may be arranged in at least one regular arrangement. The plurality of objects may include at least one checkerboard pattern. This allows the relative positions between the plurality of objects to be determined from a small number of parameters defining the relative positions of all objects. The plurality of objects may be such that the objects are not all located within the same plane. There may be at least one, in particular several objects, which is/are spaced from a plane defined by at least three other objects of the plurality of objects.

According to conventional terminology in the art, the term "position of the image sensor" as used herein refers to the position of a characteristic point of the image sensor. For illustration, the "position of the image sensor" may be defined to be the position of the point where an optical axis intersects an electrooptical sensor, a lens, or any other given optical component. The term "orientation of the image sensor" as used herein refers to the orientation of an image sensor coordinate system in space which may be quantified by three angles. Correspondingly, the "relative position" between two image sensors is the offset between the characteristic points. The "relative orientation" describes which rotation operations are required to align the coordinate system of one image sensor to the coordinate system of the further image sensor of the pair. There are various ways to describe relative positions and relative orientations. For illustration, in order to describe the orientation of an image sensor relative to a coordinate system defined by the plurality of objects, it is not required to explicitly compute rotation angles. A rotation matrix may be computed. Similarly, the relative orientation between the image sensor and the further image sensor may be described in terms of a rotation matrix. The relative position may be described in terms of a translation matrix or translation vector.

The capturing, determining and establishing steps may respectively be performed for a plurality of pairs of image sensors having overlapping fields of view. Thereby, relative positions may be determined for all pairs of image sensors having overlapping FOVs.

A pair of the plurality of pairs may include a first image sensor and an intermediate image sensor. Another pair of the plurality of pairs may include the intermediate image sensor and a second image sensor. A relative position and orientation between the second image sensor and the first image sensor may be established based on a result of the establishing step obtained for the pair and a result of the establishing step obtained for the other pair. Thereby, the relative position and orientation between the first image sensor and the intermediate image sensor and the relative position and orientation between the intermediate image sensor and the second image sensor may be computationally processed to compute the relative position and relative orientation between the second image sensor and the first image sensor. This processing may be performed if the first and second image sensors do not have overlapping fields of view and/or if no plurality of objects is positioned in the overlap area of the FOVs of these sensors.

The capturing, determining and establishing steps may respectively be performed for each pair of a further plurality of pairs of image sensors. The relative position and orientation between the second image sensor and the first image sensor may also be established based on results of the establishing step obtained for the further plurality of pairs. Thereby, the relative position and orientation between the second image sensor and the first image sensor may be determined in two independent ways. This allows a consistency check to be performed. Reliability of the calibration procedure may be quantified and/or improved.

In the method, the relative position and orientation between the second image sensor and the first image sensor may be computed in two different ways, namely using the results of the establishing step obtained for the plurality of pairs and the results of the establishing step obtained for the further plurality of pairs different from the plurality of pairs. The results may be compared to each other. For illustration, the position and orientation of the rear image sensor of a vehicle relative to the front image sensor of the vehicle may be determined using the left side image sensor as intermediate image sensor, or using the right side image sensor as intermediate sensor. The values respectively computed may be compared to each other. The comparison may be made in an optimization procedure, where it may be used to enforce a constraint of the optimization procedure.

A field of view of the first image sensor and a field of view of the second image sensor may be disjoint. The first image sensor and the second image sensor may be provided at opposite sides of the vehicle.

The method may further include determining extrinsic parameters of the plurality of image sensors in a vehicle reference frame based on results of the establishing step obtained for the plurality of pairs. To this end, one of the image sensors may be used as a reference, and the orientations and positions of all other image sensors may be determined relative to the reference image sensor. Alternatively or additionally, the positions and orientations may be determined relative to another vehicle reference frame, further using the known position and orientation of the reference image sensor relative to this vehicle reference frame.

Determining the extrinsic parameters in the vehicle reference frame may include computing re-projections of the plurality of objects. Image coordinates of the plurality of objects in the image and in the further image may be determined. Image coordinates of the objects when projected onto a projection surface may be determined both using the positions determined for the image and the positions determined for the further image, based on the extrinsic parameters for the image sensor and the further image sensor. The positions on the projection surface may be compared to each other. If the positions differ by more than a threshold, the extrinsic parameters may be corrected. Thereby, a consistent set of extrinsic parameters may be identified. Robustness of the calibration procedure may be enhanced.

The vehicle vision system may be a surround view system.

The determined extrinsic parameters may be used to compute a surround view based on images captured by the plurality of image sensors. In use, a display may be controlled based on a user selection defining a section of the surrounding which the user intends to be displayed. The display may be controlled based on images captured by the image sensors, and based on the extrinsic parameters of the vehicle vision system determined in the calibration.

The plurality of objects may include at least three objects located on a first plane and at least three objects located on a second plane. The plurality of objects may include at least six objects located on a first plane and at least six objects located on a second plane. The first plane and the second plane may be arranged at an angle relative to each other. The first plane and the second plane may be arranged at an angle of 90˚ relative to each other. In another embodiment, the first plane and the second plane may be arranged at an angle different from 0˚ and different from 90˚ relative to each other. Such a configuration of the plurality of objects allows not only extrinsic, but also intrinsic parameters to be determined. Optical distortions, such as fish-eye distortions and/or other distortions, may be corrected based on the intrinsic parameters.

The plurality of objects may further include at least three objects located on a third plane. The first plane, the second plane and the third plane may be mutually orthogonal. I.e., the plurality of objects may be configured as a trihedron with the objects positioned on the three mutually orthogonal planes. Thereby, robustness of the calibration may be further enhanced. When objects are located on first, second and third planes, the three planes do not need to be mutually orthogonal.

In the method, intrinsic parameters of the image sensor may be established based on the image, and intrinsic parameters of the further image sensor may bestablished based on the further image. This allows both extrinsic and intrinsic parameters of the vehicle vision system to be established in the calibration procedure. The intrinsic parameters may be stored for subsequent use in correcting image distortions.

The image sensors may respectively include a fisheye lens. Thereby, a large angular range may be covered using one image sensor.

At least two of the image sensors may be provided at side door mirrors of the vehicle. Geometrical obstructions problems can be mitigated.

According to another aspect, a vehicle vision system is provided. The vehicle vision system includes a plurality of image sensors and an image processing unit. The image sensors respectively have an optical component to capture images having a non-linear distortion. The image sensors are provided at different locations on the vehicle. The image processing unit is configured to process image data captured by the plurality of image sensors. In order to calibrate the vehicle vision system, the image processing unit is configured to identify a plurality of objects included both in an image captured by an image sensor and in a further image captured by a further image sensor. The image processing unit is configured to determine a position and orientation of the image sensor relative to the plurality of objects based on the captured image, and to determine a position and orientation of the further image sensor relative to the plurality of objects based on the captured further image. The image processing unit is configured to establish a relative position and orientation between the further image sensor and the image sensor based on the determined position and orientation of the image sensor relative to the plurality of objects and based on the determined position and orientation of the further image sensor relative to the plurality of objects.

The vehicle vision system is configured such that the image processing unit can calibrate the vision system even if the position of the plurality of objects relative to the vehicle is not a priori known.

The image processing unit may be configured to perform the determining and establishing steps for a plurality of pairs of image sensors.

The image processing unit may be configured to computationally determine the relative position of a first image sensor and a second image sensor which have disjoint fields of view using relative positions and orientations determined for plural pairs of image sensors which respectively have overlapping fields of view. For illustration, the image processing unit may be configured to compute the relative position and relative orientation between the second image sensor and the first image sensor based on the relative position and orientation between the first image sensor and an intermediate image sensor, and further based on the relative position and orientation between the intermediate image sensor and the second image sensor.

The vehicle vision system may be configured to perform the method of any one aspect or embodiment, with the image processing unit being configured to perform the processing of images captured by the image sensors.

The vehicle vision system may include an optical output device. The image processing unit may be configured to use the parameters of the vehicle vision system determined during calibration when outputting a section of a surround view via the optical output device.

The vehicle vision system may also include an input interface which allows a user to select the section of the surround view which is to be visually output.

According to another aspect, a vehicle having a vehicle vision system according to any one aspect or embodiment is provided.

Embodiments may be used in surround view systems without being limited thereto.

Brief Description of the Drawings

Embodiments will be described in more detail with reference to the accompanying drawings:

Fig. 1 is a schematic view of a vehicle having a vehicle vision system.

Fig. 2 is a schematic view of a plurality of objects used to calibrate the vehicle vision system.

Fig. 3 is a schematic view of the vehicle of Fig. 1 to illustrate a calibration procedure.

Fig. 4 illustrates an image captured using an image sensor.

Fig. 5 illustrates an image captured using a further image sensor.

Fig. 6 is a flow chart of a method which includes a calibration method performed by the vehicle vision system.

Fig. 7 is a flow chart of a procedure for determining a relative position and orientation between image sensor.

Fig. 8 illustrates a projection surface.

Detailed description

Throughout the description, identical or similar reference numerals refer to identical or similar components. While some embodiments will be described in specific contexts, such as a surround view system, embodiments are not limited to these specific contexts. Terms such as "forward", , "front", "rearward", "rear", or "side" as used in the context of vehicle vision systems relate to the vehicle reference frame. I.e., the "forward" direction is the direction visible to the driver through the windshield, etc.

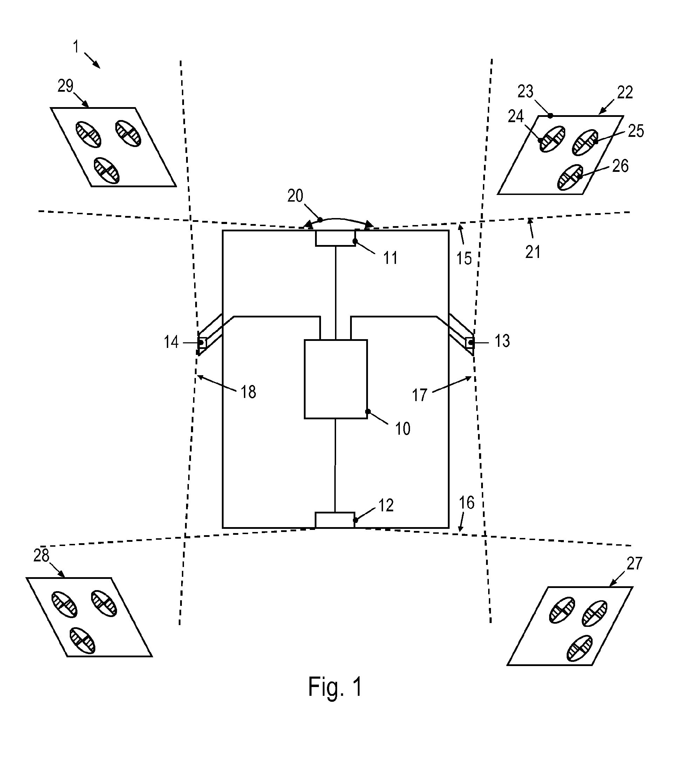

Fig. 1 is a schematic view showing a vehicle 1. The vehicle 1 includes a vehicle vision system. The vehicle vision system comprises a plurality of image sensors 11-14 and an image processing unit 10 coupled to the plurality of image sensors 11-14.

The image sensors 11-14 may respectively be configured as wide-angle image sensors. A field of view (FOV) of the image sensors 11-14 may respectively have a lateral opening angle (i.e., an opening angle in a plane parallel to the base plane of the vehicle 1) of at least 170˚. The FOVs of the image sensors 11-14 may have a lateral opening angle of at least 175˚. The image sensors 11-14 may respectively include a fisheye lens. The image sensors are configured such that, in order to accommodate a wide FOV, they capture images which have a non-linear distortion. The wide angle characteristics and resulting non-linear distortions are typically caused by optical components of the image sensors. The images captured by the image sensors 11-14 may respectively show a non-linear radial distortion, a non-linear barrel distortion and/or a non-linear fisheye distortion. The image sensors 11-14 respectively comprise an electro optical sensor. The image sensors 11-14 may respectively comprise a CCD sensor. The electro optical sensors of the image sensors 11-14 are coupled to the image processing unit (11-14) of the vehicle vision system.

The vehicle vision system may be configured as a surround view system. In this case, the FOVs 15-18 of the image sensors 11-14 may cover the full 360˚ angular range around the vehicle 1 in at least one plane parallel to the vehicle base plane. An opening angle of the FOVs 15-18 in this plane may be at least 170˚ or at least 175˚, as illustrated for opening angle 20 of FOV 15 of image sensor 11.

The vehicle vision system may include at least four image sensors 11-14. An image sensor 11, which may be installed at the vehicle front, may have the FOV 15 facing in a forward direction. Another image sensor 12, which may be installed at the vehicle rear, may have the FOV 16 facing in a rearward direction. Other image sensors 13 and 14, which may be installed at sides of the vehicles, may have a FOV 16 or 18, respectively, which is directed towards the respective side of the vehicle. The image sensors 13, 14 installed at the sides may be installed in door mirrors. If the door mirrors have moveable components, the image sensors 13, 14 may respectively be installed in a stationary section of the door mirrors.

The processing unit 10 is configured to receive the image data generated by the different image sensors 11-14 and to fuse the image data in such a way that a surround view is generated. The processing unit 10 is further configured to determine both extrinsic and intrinsic parameters of the image sensors 11-14 in a calibration procedure. The intrinsic parameters may include parameters of the respective image sensors which define the non-linear distortion of the captured images. Various parameterizations are known and used to describe the non-linear distortion of wide-angle image sensors. Examples for such parameterizations include polynomial models of radial distortion, non-polynomial models of fisheye distortion, the FOV model or the perspective model. The processing unit 10 may store the intrinsic parameters determined in the calibration procedure. The processing unit 10 may retrieve the intrinsic parameters when fusing images, in order to correct for non-linear distortions in captured images.

The extrinsic parameters of the vehicle vision system include information on the position and orientation of all image sensors in a vehicle reference frame which is attached to the vehicle. The vehicle reference frame may for example be defined by one of the image sensors, such as image sensor 11. I.e., in order to determine the extrinsic parameters, the position and orientation of the image sensors 12-14 may be determined relative to the position and orientation of the image sensor 11. The extrinsic parameters may also be determined with reference to any other coordinate system attached to the vehicle. In this case, the position and orientation of the image sensors 12-14 may first be determined relative to the position and orientation of the image sensor 11. Based on a known position and orientation of the image sensor 11 in the vehicle reference system, the position and orientation of all image sensors 11-14 in the vehicle reference system may be determined.

The processing unit 10 is configured to determine the extrinsic parameters of all image sensors 11-14 of the vehicle vision system by evaluating pairs of images captured by image sensors having overlapping FOVs. Extrinsic parameters are not determined in a one-by-one fashion separately for each camera. The calibration process is performed so as to establish a consistent set of extrinsic parameters for the various image sensors 11-14. This consistent set of extrinsic parameters is determined by combining images captured using different image sensors.

In the calibration procedure, relative positions and orientations between an image sensor and a further image sensor having overlapping FOVs are determined. A plurality of objects is positioned in an overlap region of the FOVs of the image sensors. The positions of the plurality of objects relative to each other are known. For illustration, the plurality of objects may include markings in a regular arrangement, such as a checkerboard pattern, with the spacing between corners of the checkerboard being known. The position of the plurality of objects relative to the vehicle 1 does not need to be known.

In the calibration method, the position and orientation of an image sensor which captures an image of the plurality of objects may be determined relative to the plurality of objects. To determine the position and orientation of the image sensor relative to the plurality of objects, the matrix elements of a rotation matrix and the vector elements of a translation vector may be determined which define the mapping between point coordinates in a coordinate system of the plurality of objects and image coordinates of the image captured by the image sensor. Similarly, the position and orientation of a further image sensor which captures a further image of the plurality of objects may be determined relative to the plurality of objects.

Based on the position and orientation of the image sensor relative to the plurality of objects and on the position and orientation of the further image sensor relative to the same plurality of objects, the relative position and orientation between the image sensor and the further image sensor may be derived.

By repeating these acts for plural pairs of image sensors having overlapping FOVs, the relative position and orientation between image sensors which have overlapping FOVs may be determined. This data may be processed to determine the relative position and orientation between image sensors which have non-overlapping FOVs.

Fig. 1 schematically illustrates a plurality 22 of objects 24-26. The plurality 22 of objects is positioned in an overlap region 21 of a FOV 15 of the image sensor 11 and of a FOV 17 of the image sensor 13. The objects 24-26 are arranged on at least one plane 23. The objects 24-26 may have a configuration which can readily be detected using object recognition schemes, such as edge detection. For illustration, the objects 24-26 may be corners of rectangles of a checkerboards pattern. While only three objects located in a plane 23 are illustrated in Fig. 1, the plurality 22 of objects may have a trihedron configuration. The plurality 22 of objects may include at least three objects located on a first plane, at least three objects located on a second plane and at least three objects located on a third plane. The first, second and third plane may be mutually orthogonal. Greater numbers of objects may be positioned on each plane to enhance stability of the calibration procedure. For illustration, the plurality 22 of objects may include at least six objects located on the first plane, at least six objects located on a second plane and at least six objects located on a third plane.

An image of the plurality 22 of objects captured by image sensor 11 and a further image of the plurality 22 of objects captured using the other image sensor 13 are evaluated. These images are captured while the plurality 22 of objects is in the same position relative to the vehicle 1. The position relative to the vehicle 1 does not need to be known a priori. The image captured by image sensor 11 and the other image captured using the other image sensor 13 are processed to determine the relative position and orientation between the image sensor 11 and the other image sensor 13. Additionally, intrinsic parameters of the image sensor 11 may be determined based on the image captured by image sensor 11, and intrinsic parameters of the further image sensor 13 may be determined based on the further image captured by the further image sensor 13.

Similarly, the relative position and orientation between image sensor 13 and image sensor 12 may be determined by capturing an image of a plurality 27 of objects positioned in an overlap region of the FOV 17 of image sensor 13 and of the FOV 16 of image sensor 12. Processing may be performed as explained for the pair of image sensors 11 and 13 above.

Similarly, the relative position and orientation between image sensor 11 and image sensor 14 may be determined by capturing an image of a plurality 29 of objects positioned in an overlap region of the FOV 15 of image sensor 11 and of the FOV 18 of image sensor 14. The relative position and orientation between image sensor 14 and image sensor 12 may be determined by capturing an image of a plurality 28 of objects positioned in an overlap region of the FOV 18 of image sensor 14 and of the FOV 16 of image sensor 12. For any pair of image sensors having overlapping FOVs, processing of the captured images may be done in the same way as explained for the pair of image sensors 11 and 13 above.

While a plurality 22 of objects in the overlap region of FOVs of a pair including image sensors 11 and 13, another plurality 27 of objects in the overlap region of FOVs of a pair including image sensors 13 and 12, another plurality 29 of objects in the overlap region of FOVs of a pair including image sensors 11 and 14, and another plurality 28 of objects in the overlap region of FOVs of a pair including image sensors 14 and 12 are illustrated in Fig. 1, the markings used for determining a relative position and orientation between image sensors having overlapping FOVs do not need to be present at the same time. For illustration, one and the same trihedron may first be positioned in the overlap region 21 of FOVs 15 and 17 of image sensors 11 and 13 to determine the relative position and orientation between image sensor 11 and image sensor 13. The trihedron may then be re-positioned to the other overlap regions, to sequentially determine the relative position and orientation between image sensors having overlapping FOVs. Further, the plurality of objects may also be positioned at different locations in the overlap region 21 in a time sequential manner, in order to increase the amount of data available for calibration.

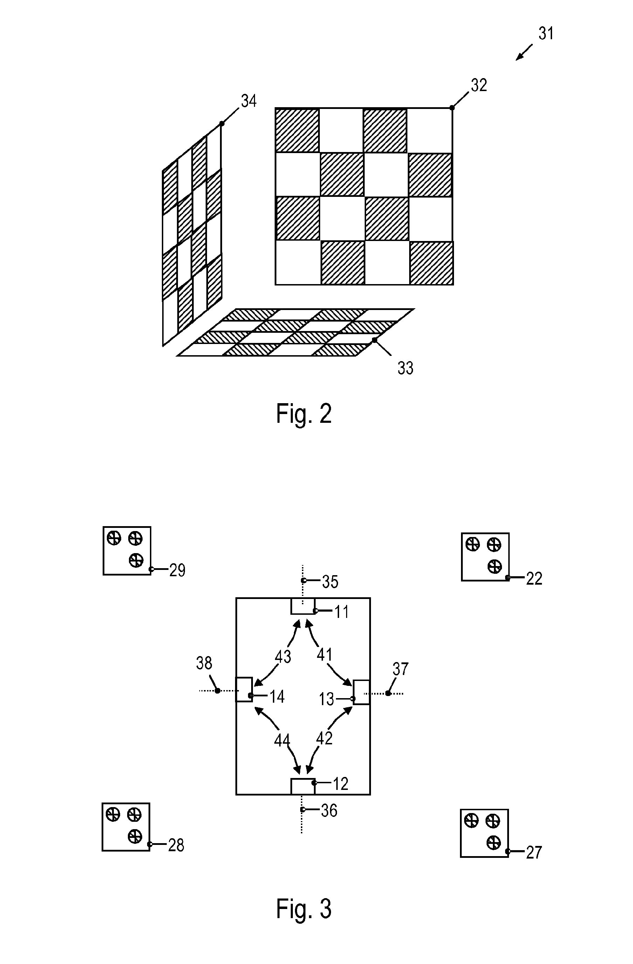

Fig. 2 is a schematic representation of a plurality 31 of objects. The plurality 31 of objects used for calibration includes markings provided on three different planes 32-34. The three planes 32-34 may be mutually orthogonal, as shown in Fig. 2, or may be arranged at another angle different from 0˚ relative to each other. A checkerboard pattern is provided on each one of the planes 32-34. The objects may be the corners of rectangles of the checkerboard. The relative positions of these objects can be quantified by one parameter for a square checkerboard, which represents the side length of a square of the checkerboard. The corners may be detected in the captured images using conventional edge detection algorithms.

Other markings and numbers of objects may be used. In embodiments, the objects may be positioned on at least two planes which are different from each other. The two planes may in particular be arranged at an angle of 90˚ relative to each other. On each one of the planes, at least three objects, in particular at least six objects, may be provided.

In still other implementations, a plurality of objects may be used in which the objects are not all located in the same plane. I.e., some of the objects may be positioned such that they are spaced from a plane in which at least three other objects of the plurality of objects are located.

Fig. 3 is a schematic view of the vehicle 1 having the vehicle vision system.

Images of a plurality 22 of objects, which may be dedicated markings such as checkerboard patterns, are captured by image sensor 11 and by another image sensor 13 of a pair 41 of image sensors. Based on these images, the relative position and orientation between the image sensor 11 and the image sensor 13 may be determined. Further, intrinsic parameters of the image sensor 11 and of the image sensor 13 may be determined.

The relative position between image sensor 11 and image sensor 13 may be defined by a translation vector between a characteristic point of image sensor 11 and a characteristic point of image sensor 13. The relative orientation between image sensor 11 and image sensor 13 may be defined by a rotation matrix required to align a coordinate system of image sensor 11 and a coordinate system of image sensor 13 with each other. An axis 35 of the coordinate system of image sensor 11 may be a characteristic axis of the optical system of image sensor 11, such as the optical axis. Similarly, an axis 37 of the coordinate system of image sensor 13 may be a characteristic axis of the optical system of image sensor 13, such as the optical axis.

By processing images of a plurality 27 of objects positioned in an overlap region of FOVs, the relative position and orientation of image sensors 13 and 12 of the pair 42 may be determined. By processing images of a plurality 29 of objects positioned in an overlap region of FOVs, the relative position and orientation of image sensors 11 and 14 of the pair 43 may be determined. By processing images of a plurality 28 of objects positioned in an overlap region of FOVs, the relative position and orientation of image sensors 14 and 12 of the pair 44 may be determined.

The thus determined relative positions and orientations allow a consistency check to be performed. For illustration, the relative position and orientation between image sensor 12 and image sensor 11 may be determined in two different ways. The relative position and orientation between image sensor 12 and image sensor 11 may be computed based on results obtained for pair 41 and for pair 42. The relative position and orientation between image sensor 12 and image sensor 11 may also be computed based on results obtained for pair 43 and for pair 44. The relative position and orientation between image sensor 12 and image sensor 11 determined using data from respectively different pairs of image sensors may be compared to each other. Such a comparison may be performed in an optimization procedure in which extrinsic parameters of all image sensors 11-14 may be determined under the constraint that the relative position and orientation between image sensor 11 and image sensor 12 should have the same value, independently of whether the relative position and orientation determined for pairs 41 and 42 or whether the relative position and orientation determined for pairs 43 and 44 is used.

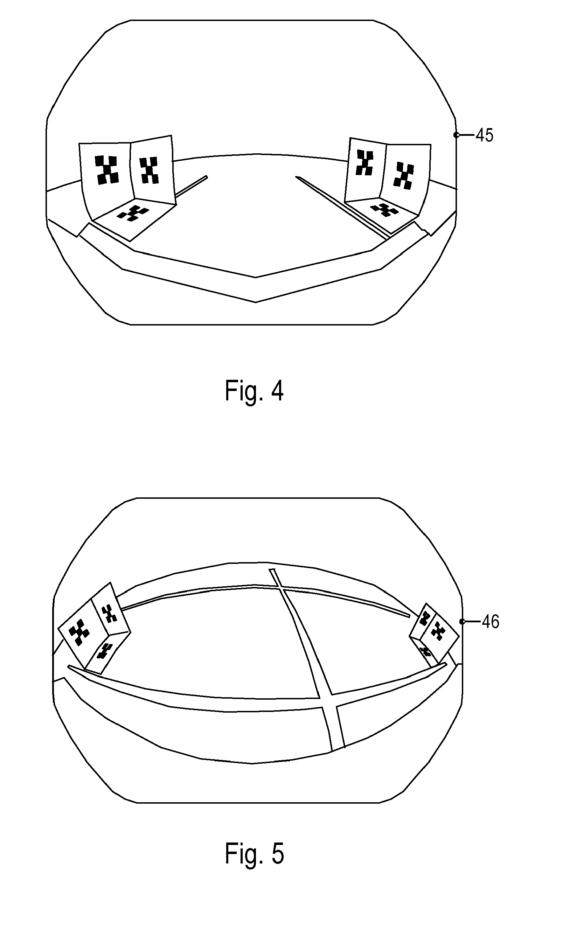

Fig. 4 is a schematic representation of an image 45 captured using an image sensor. Fig. 5 is a schematic representation of an image 46 captured using a further image sensor. The images 45 and 46 are captured using image sensors having overlapping FOVs. For illustration, image 45 may be an image captured using image sensor 11. Image 46 may be an image captured using image sensor 13.

The trihedron with checkerboard patterns on the right-hand side of image 45 represents the same plurality of objects as the trihedron with checkerboard patterns on the left-hand side of image 46. This allows the relative position and orientation between the image sensors which captured the images 45 and 46 to be determined.

Procedures which may be used to determine the relative position and orientation between cameras having overlapping and non-overlapping FOVs are described in the following. Alternative procedures and/or alternative numerical descriptions may be used.

The procedures generally include: (A) determining, for each image sensor of a pair of image sensors, a position and orientation of the image sensor relative to a coordinate system defined by a plurality of objects; (B) establishing the relative position and orientation between an image sensor of the pair and another image sensor of the pair, using the results of (A); and (C) using the established relative position and orientation determined for plural different pairs of image sensors to determine a relative position and orientation of image sensors which have disjoint FOVs.

(A) Determining a position and orientation of an image sensor relative to the coordinate system defined by the plurality of objects

Homogeneous coordinates may be used to define a mapping between coordinates of the plurality of objects defined in a coordinate system of the plurality of objects and the image plane of the image sensor.

Homogeneous coordinates may be used to describe the mapping of coordinates in the coordinate space defined by the plurality of objects onto the image plane as matrix multiplication. In the coordinate system defined by the plurality of objects, coordinates of an object may be written as 4-vector

$$\vec{X} = \begin{bmatrix} X \\ Y \\ Z \\ 1 \end{bmatrix}, \tag{1}$$

where X, Y and Z are the coordinates in the coordinate system of the plurality of objects. Homogeneous coordinates are used, with $\vec{X}$ having four lines.

The projection of an object having coordinates given by (1) onto the image plane of an image sensor is defines as

$$\vec{x} = \begin{bmatrix} x \\ y \\ z \end{bmatrix}, \tag{2}$$

where

$$z = a_0 + a_1 d \dots + a_n d^n \tag{3}$$

is a polynomial description for a non-radial distortion of the image captured by the image sensor. For illustration, for an image sensor having a fisheye lens, Equation (3) describes the polynomial approximation for the fisheye

distortion. In Equation (3), d denotes the distance from the image center. The coefficients $a_0$, $a_1$, ..., $a_n$ are intrinsic parameters of the image sensor having non-linear distortion, when a polynomial description of the image sensor is used.

Depending on the model which is used to describe the non-linear distortion of the optical system of the image sensor, other representations for the z-component may be used. Correspondingly, different intrinsic parameters may be determined in the calibration may vary depending on the model used to describe the non-linear distortions.

In homogeneous coordinates, the mapping from the coordinate system attached to the plurality of objects to the image space may be written as matrix multiplication. H may be written as

$$H = \begin{bmatrix} R_{11} & R_{12} & R_{13} & T_1 \\ R_{21} & R_{22} & R_{23} & T_2 \\ R_{31} & R_{32} & R_{33} & T_3 \\ 0 & 0 & 0 & 1 \end{bmatrix}. \tag{4}$$

H includes rotation parameters R and translation parameters T. The matrix H, once known, describes the position and orientation of the image sensor relative to the coordinate system attached to the plurality of objects.

By virtue of the definition of H, the matrix product

$$H\vec{X} \tag{5}$$

has vector components which are collinear with $\vec{x}$

The plurality of objects includes objects located on a first plane and may also include other objects located on a second and third plane, the various planes being mutually orthogonal. In the following, determining the matrix elements of H will be explained in the context of one of the planes. The same techniques and steps may be applied to each one of the three planes of the trihedron on which objects are located.

Without loss of generality, the coordinates of the objects located on a plane may be assumed to satisfy Z=0. This means that plane is the XY plane of the trihedron.

The condition that the first three components of $H\vec{X}$ are collinear with $\vec{x}$ may then be rewritten as:

$$\begin{bmatrix} x \\ y \\ z \end{bmatrix} \times \left( \begin{bmatrix} R_{11} & R_{12} & T_1 \\ R_{21} & R_{22} & T_2 \\ R_{31} & R_{32} & T_3 \end{bmatrix} \begin{bmatrix} X \\ Y \\ Z \end{bmatrix} \right) = 0. \tag{6}$$

In Equation (6), use has been made of the fact that the vector product of collinear vectors is equal to zero. This equation has to hold for the coordinates of each object (e.g., corner of checkerboard pattern or other marking) and the corresponding image point coordinates. The x- and y-image point coordinates may be determined by conventional image recognition

In the following, objects located on the plane will be labeled by an index "j". I.e., $X_j$ and $Y_j$ represent coordinates of object j in the X-Y-plane of the coordinate system defined by the plurality of objects. The values $x_j$ and $y_j$ are image point coordinates for the object j in the image plane of the image sensor.

Equation (6), when multiplied out, may be re-written as the set of equations:

$$y_j\left(R_{31}X_j + R_{32}Y_j + T_3\right) - \left(a_0 + a_1 d \ldots + a_n d^n\right)\left(R_{21}X_j + R_{22}Y_j + T_2\right) = 0, \tag{7a}$$

$$\left(a_0 + a_1 d \ldots + a_n d^n\right)\left(R_{11}X_j + R_{12}Y_j + T_1\right) - x_j\left(R_{31}X_j + R_{32}Y_j + T_3\right) = 0, \tag{7b}$$

$$x_j\left(R_{21}X_j + R_{22}Y_j + T_2\right) - y_j\left(R_{11}X_j + R_{12}Y_j + T_1\right) = 0. \qquad (7c)$$

Equation (7c) is independent of $z = a_0 + a_1 d \,...+a_n d^n$. I.e., Equation (7c) is independent of intrinsic parameters of the image sensor.

Equation (7c) holds for the various objects located on the plane under consideration. Equation (7c) is used to determine the parameters of the mapping matrix H, with the exception of the parameter $T_3$.

Defining a vector

$$\vec{M} = \begin{bmatrix} R_{11} \\ R_{12} \\ R_{21} \\ R_{22} \\ T_1 \\ T_2 \end{bmatrix} \qquad (8)$$

which includes the parameters of the H-matrix on which Equation (7c) depends, Equation (7c) may be rewritten in matrix form.

A matrix

$$L = \begin{bmatrix} -y_1 X_1 & -x_1 Y_1 & x_1 X_1 & y_1 Y_1 & -x_1 & y_1 \\ -y_2 X_2 & -x_2 Y_2 & x_2 X_2 & y_2 Y_2 & -x_2 & y_2 \\ -y_3 X_3 & -x_3 Y_3 & x_3 X_3 & y_3 Y_3 & -x_3 & y_3 \\ & & \cdots & & & \end{bmatrix} \qquad (9)$$

may be defined which has one line for each object located in the respective plane of the coordinate system of the plurality of objects. In order to reduce noise problems and to enhance stability, the number of objects may be selected to be much greater than six. In this case, Equation (7c) defines an over-determined set of equations for the parameters of the H-matrix which are components of the vector of Equation (8).

To solve this overdetermined set of equations, the vector $\vec{M}$ is determined for which the matrix product

$$\left\| L\vec{M} \right\| \qquad (10)$$

becomes minimum under the constraint that M has fixed modulus, e.g., under the constraint that

$$\left\| \vec{M} \right\| = 1. \qquad (11)$$

Other techniques for solving the overdetermiend set of equations to determine the vector $\vec{M}$ may be employed.

Using the fact that the columns of the part of H which describes a rotation, i.e., the $3\times3$ matrix in the left upper corner of Equation (4), are orthonormal, the remaining parameters of the rotation may be determined from $R_{11}$, $R_{12}$, $R_{21}$ and $R_{22}$. All elements of H with the exception of $T_3$ can be determined once Equation (10) has been solved under the constraint of Equation (11).

With the objects being located on plural different planes, the processing steps described above may be performed for each one of the different planes. The mapping between the objects located on the various planes and the image plane of the image sensor is described by a mapping matrix H for the various planes. By combining the equations which are independent of the intrinsic parameters of the image sensor, an over-determined set of equations for matrix elements of the mapping matrix H may respectively be established. This set of equations may be solved to determine all but one of the parameters of the matrix H, as described above.

The thus obtained results for matrix elements of H may be re-inserted into Equations (7a) and (7b). The resulting set of equations is linear in the intrinsic parameters $a_0$, $a_1$, ..., $a_n$ and in the still unknown matrix elements of H. I.e., when the $T_3$-matrix element has remained un-determined when solving Equation (10), $T_3$ may be determined based on Equations (7a) and (7b). For reasons of stability, the equations which are obtained for the sets of objects located on different planes (e.g., for the different markings located on the three orthogonal planes of the trihedron shown in Fig. 2) may be combined into one matrix equation.

For illustration, for a plurality of objects in which markings are provided on three orthogonal planar boards, an index "i" may be introduced which labels the planar boards. For three planar boards, $1 \leq i \leq 3$.

Equations (7a) and (7b) may then be re-written as the following matrix equation. For simplicity, it is assumed that the same number "k" of objects is positioned on each board:

$$
\begin{bmatrix}
Board\,1 \\
A_{1,1}, A_{1,1}d_{1,1}...A_{1,1}d_{1,1}{}^{n}, -y_{1,1}, 0, 0 \\
C_{1,1}, C_{1,1}d_{1,1}...C_{1,1}d_{1,1}{}^{n}, -x_{1,1}, 0, 0 \\
... \\
A_{1,k}, A_{1,k}d_{1,k}...A_{1,k}d_{1,k}{}^{n}, -y_{1,k}, 0, 0 \\
C_{1,k}, C_{1,1}d_{1,k}...C_{1,1}d_{1,k}{}^{n}, -x_{1,k}, 0, 0 \\
Board\,2 \\
A_{2,1}, A_{2,1}d_{2,1}...A_{2,1}d_{2,1}{}^{n}, 0, -y_{2,1}, 0 \\
C_{2,1}, C_{2,1}d_{2,1}...C_{2,1}d_{2,1}{}^{n}, 0, -x_{2,1}, 0 \\
... \\
A_{2,k}, A_{2,k}d_{2,k}...A_{2,k}d_{2,k}{}^{n}, 0, -y_{2,k}, 0 \\
C_{2,k}, C_{2,1}d_{2,k}...C_{2,1}\,d_{2,k}{}^{n}, 0, -x_{2,k}, 0 \\
Board\,3 \\
A_{3,1}, A_{3,1}d_{3,1}...A_{3,1}d_{3,1}{}^{n}, 0, 0, -y_{3,1} \\
C_{3,1}, C_{3,1}d_{3,1}...C_{3,1}d_{3,1}{}^{n}, 0, 0, -x_{3,1} \\
... \\
A_{3,k}, A_{3,k}d_{2,k}...A_{3,k}d_{3,k}{}^{n}, 0, 0, -y_{3,k} \\
C_{3,k}, C_{3,1}d_{3,k}...C_{3,1}d_{3,k}{}^{n}, 0, 0, -x_{3,k},
\end{bmatrix}
\cdot
\begin{bmatrix}
a_0 \\
... \\
a_N \\
T_{1,3} \\
T_{2,3} \\
T_{3,3}
\end{bmatrix}
=
\begin{bmatrix}
B_{1,1} \\
D_{1,1} \\
... \\
B_{1,k} \\
D_{1,k} \\
B_{2,1} \\
D_{2,1} \\
... \\
B_{2,k} \\
D_{2,k} \\
B_{3,1} \\
D_{3,1} \\
... \\
B_{3,k} \\
D_{3,k}
\end{bmatrix}
\qquad (12)
$$

In Equation (12), the following definitions are used:

$$A_{i,j} = R_{i,21}X_{i,j} + R_{i,22}Y_{i,j}$$

$$B_{i,j} = y_{i,j}(R_{i,31}X_{i,j} + R_{i,32}Y_{i,j})$$

$$C_{i,j} = R_{i,11}X_{i,j} + R_{i,12}Y_{i,j} + T_{i,1}$$

$$D_{i,j} = x_{i,j}(R_{i,31}X_{i,j} + R_{i,32}X_{i,j})$$

$$(13)$$

Here, the index i labels the board number. The index j labels objects on the respective board. I.e., $y_{i,j}$ denotes point j on board i. $R_{i,ab}$ and $T_{i,a}$ denote components of the H-matrix for board i. For illustration, $R_{i,21}$ denotes the matrix elements $R_{21}$ in Equation (4) of the mapping matrix H for board number i.

The equation system defined by Equations (12) and (13) may be over-determined. The equation system may be solved, for example, using a matrix pseudoinverse.

The matrix elements of the mapping matrix H which defines the mapping between objects located in an overlap region of FOVs onto the image plane of an image sensor may thus be determined. Additionally, the intrinsic parameters of the image sensor may be determined. The matrix elements of the mapping matrix H describe the position and orientation of the image sensor relative to the coordinate system of the plurality of objects, which are mapped onto the image plane of the image sensor.

The position and orientation of an image sensor relative to the coordinate system of the plurality of objects may be determined for at least two image sensors which both capture an image of the plurality of objects. The position and orientation of the image sensor relative to the pattern positioned in the overlap region of the FOVs may in each case be determined as described above.

(B) Establishing a relative position and orientation between image sensors having overlapping FOVs

Based on matrix elements of the H-matrices determined for image sensors having overlapping FOVs, the relative position and orientation between the image sensors having overlapping FOVs may be determined.

Different image sensors will be referred to by indices $\alpha$, $\beta$, $\gamma$ in the following explanations. The indices may denote the image sensors 11-14 of the vehicle vision system explained with reference to Figs. 1-3.

For any pair of image sensors, the relative orientation between these image sensors is defined by a rotation matrix $R^{(\alpha, \beta)}$. The rotation matrix $R^{(\alpha, \beta)}$ is a 3×3-matrix defining the rotations required to align the coordinate systems of image sensors $\alpha$ and $\beta$. The relative position between the image sensors is defined by a translation vector $T^{(\alpha, \beta)}$. The translation vector $T^{(\alpha, \beta)}$ is a 3-vector defining the displacement between the origins of the coordinate systems of image sensors $\alpha$ and $\beta$.

If $\Omega$ denotes a trihedron with markings or another plurality of objects used in the calibration, the 3×3-matrix in the upper left corner of the H-matrix defined in Equation (8) is a rotation matrix $R^{(\alpha, \Omega)}$ which describes the orientation of image sensor $\alpha$ relative to the plurality of objects $\Omega$. Similarly, the top three elements in the last column of the H-matrix defined in Equation (8) is a translation vector $T^{(\alpha, \Omega)}$ which describes the position of image sensor $\alpha$ relative to the plurality of objects $\Omega$.

The relative position and orientation between image sensors having overlapping fields of view in which the plurality of objects $\Omega$ is arranged may be determined according to:

$$R^{(\alpha,\beta)} = R^{(\alpha,\Omega)}\left(R^{(\beta,\Omega)}\right)^{-1} = R^{(\alpha,\Omega)}\left(R^{(\beta,\Omega)}\right)^{T} \text{ and } \qquad (14)$$

$$T^{(\alpha,\beta)} = T^{(\alpha,\Omega)} - R^{(\alpha,\beta)}T^{(\beta,\Omega)}. \qquad (15)$$

The rotation matrices and translation vectors on the right-hand side of Equation (14) and (15) are respectively determined with respect to the coordinate system of the patterns positioned in the overlap region of the FOVs of the two image sensors $\alpha$ and $\beta$.

The image sensors $\alpha$ and $\beta$ are arranged at different locations on the vehicle. In order to determine the position and orientation of the respective image sensor relative to the plurality of objects positioned in the overlap region, different areas of the captured images are evaluated. For illustration, assuming that the relative position and orientation between image sensors 11 and 13 is to be established, the plurality 22 of objects is located on the right-hand side of the image captured by image sensor 11 and on the left-hand side of the image captured by image sensor 13. When $R^{(\alpha, \Omega)}$ used in Equations (14) and (15) is determined by object recognition performed on the right half of the image captured by image sensor $\alpha$, $R^{(\beta, \Omega)}$ used in Equations (14) and (15) is determined by object recognition performed on the left half of the image captured by image sensor $\beta$. This correspondingly applies to the translation vectors.

The relative position and orientation between image sensors having overlapping FOVs may be determined for all pairs of such image sensors. For a vehicle vision system configured as a surround view system with four image sensors, as illustrated in Figs. 1-3, the relative position and orientation may be determined between image sensors 11 and 13; between image sensors 13 and 12; between image sensors 11 and 14; and between image sensors 14 and 12. The relative position and orientation may be determined in a pairwise manner. This provides enhanced flexibility. For illustration, it is not required that four trihedrons with patterns are simultaneously positioned in the four overlap regions of FOVs. One trihedron may be sequentially positioned in four different overlap regions. The vehicle 1 is not required to remain stationary relative to a world reference frame when the relative positions and orientations of image sensors of different pairs are determined. For illustration, the vehicle 1 could be moved after the relative position and orientation between image sensors 11 and 13 have been determined, and before the relative position and orientation between image sensors of another pair are determined.

(C) Establishing a relative position and orientation between image sensors having disjoint FOVs

Based on the relative position and orientation obtained for different pairs of image sensors in accordance with the procedure described above, the relative position and orientation between image sensors which have disjoint FOVs may be determined.

In order to determine the relative position and orientation between a first image sensor and a second image sensor which do not have overlapping FOVs, the relative positions and orientations obtained for several pairs of image sensors which have overlapping FOVs are processed. To this end, at least one intermediate image sensor is selected which has an overlapping FOV with at least one of the first image sensor and the second image sensor.

If the intermediate image sensor has an overlapping FOV with both the first image sensor and the second image sensor, the relative position and orientation between the first image sensor and the second image sensor may be computed based on the relative position and orientation between the first image sensor and the intermediate image sensor and based on the relative position and orientation between the second image sensor and the intermediate image sensor.

If $\alpha$ is the index of the first image sensor, $\beta$ is the index of the second image sensor, and $\gamma$ is the index of the intermediate image sensor:

$$R^{(\alpha,\beta)} = R^{(\alpha,\gamma)}R^{(\gamma,\beta)} \ \text{ and} \tag{16}$$

$$T^{(\alpha,\beta)} = T^{(\alpha,\gamma)} + R^{(\beta,\gamma)}T^{(\beta,\gamma)}. \tag{17}$$

The rotation matrices and translation vectors on the right-hand side of Equation (16) and (17) may be determined as described above.

For illustration, referring to the vehicle vision system of Figs. 1-3, the relative position and orientation between the image sensor 11 installed to face in a forward direction and the image sensor 12 installed to face in a rearward direction may be determined by using the image sensor 13 installed on one side of the vehicle or the image sensor 14 installed on the opposite side of the vehicle as intermediate image sensor. This would apply similarly for any pair of image sensors having non-overlapping FOVs.

For a vehicle surround view system, the relative position and orientation between image sensors disposed such that their optical axis is directed into opposite directions may be determined in two different ways. This allows a consistency check to be performed. The consistency check may be enforced as a constraint in an optimization procedure in which the extrinsic parameters of all image sensors are determined.

Referring to Fig. 3, the relative position and orientation between image sensors 11 and 12 may be determined using results established for pairs 41 and 42. The relative position and orientation between image sensors 11 and 12 may also be determined using results established for pairs 43 and 44. The constraint that the values for the relative position and orientation determined in two different ways are the same may be used in determining the extrinsic parameters of the vehicle vision system.

When the position and orientation of one image sensor in an arbitrary vehicle reference frame attached to the vehicle is known, the positions and orientations of all image sensors of the vehicle vision system may be determined using the relative positions and orientations between image sensors. For illustration, the position and orientation of the image sensor 11 relative to a an arbitrary vehicle reference frame may be de determined independently. Alternatively, the coordinate system of the image sensor 11 may be defined to coincide with the vehicle reference frame.

The rotation matrix which describes the orientation of the reference image sensor $\alpha$, e.g. of image sensor 11, in the vehicle reference frame is denoted by $R^{(\alpha)}$. The translation vector which describes the position of the reference image sensor in the vehicle reference frame is denoted by $T^{(\alpha)}$. The position and orientation of any other image sensor in the vehicle reference frame can be determined according to:

$$R^{(\beta)} = R^{(\alpha)}R^{(\alpha,\beta)} \ \text{ and} \tag{18}$$

$$T^{(\beta)} = T^{(\alpha)} + R^{(\alpha)} T^{(\alpha,\beta)}. \tag{19}$$

For illustration, if the image sensor 11 facing in a forward direction is used as a reference image sensor, the position and orientation of the image sensor 12 facing in a rearward direction and of the image sensors 13 and 14 facing in a lateral direction may be determined in the vehicle reference frame according to Equations (18) and (19). For image sensors 13 and 14, the relative position and relative orientation on the right-hand side of Equations (18) and (19) may be determined as described in (A) above. For image sensor 12, the relative position and relative orientation on the right-hand side of Equations (18) and (19) may be determined as described in (B) above

Stability of the calibration procedure may be further enhanced in various ways.

As already described above, for a surround view system, there are different independent ways to determine the position and orientation of at least some of the image sensors, such as image sensor 12. Consistency may be enhanced by using the constraint that the value for the position and orientation of such image sensors should be not depend on which images are evaluated to determine the position and orientation.

Additionally or alternatively, a re-projection of the images captured in the calibration may be computed. The image coordinates of the plurality of objects located in an overlap region of FOVs has been determined. For either one of the image sensors which has captured an image of the plurality of objects, the projection onto a projection surface may be computed based on the established extrinsic parameters, i.e., orientations and positions of image sensors. The resulting positions of the objects when projected onto the projection surface computed by re-projecting the image of one image sensor of the pair and of another image sensor of the pair may be compared to each other. If the positions differ by more than a threshold, the extrinsic and optionally also intrinsic parameters may be adjusted in an iterative procedure to improve agreement. By virtue of such an iterative adjustment, a set of extrinsic parameters may be obtained which yields consistent transitions between re-projected images in use of the vehicle vision system after calibration.

For illustration, referring to Figs. 4 and 5, a re-projection of the checkerboard trihedron on the right-hand side of image 45 and a re-projection of the checkerboard trihedron on the left-hand side of image 46 should ideally coincide. By iteratively adjusting the extrinsic parameters of the vehicle vision system, a residual mismatch may be reduced.

Additionally or alternatively, the amount of data on which calibration is performed may be enlarged. Noise problems can thereby be reduced. To this end, the plurality of objects (e.g., the trihedron having three checkerboard patterns or another suitable marking) may be positioned at different locations in the same overlap region of FOVs of image sensors in a sequential manner. For each one of the plural different positions, the image analysis described above may be performed. Thereby, the number of points used for calibration may be increased.

For illustration, referring to Fig. 1, the plurality of objects 22 may be shifted to various different locations in the overlap region 21. The relative position and orientation between image sensors 11 and 13 may be determined based on the results obtained for the images captured for the various different locations. This is possible because the image system calibration does not require the location of the plurality of objects 22 to be known relative to the vehicle a priori.

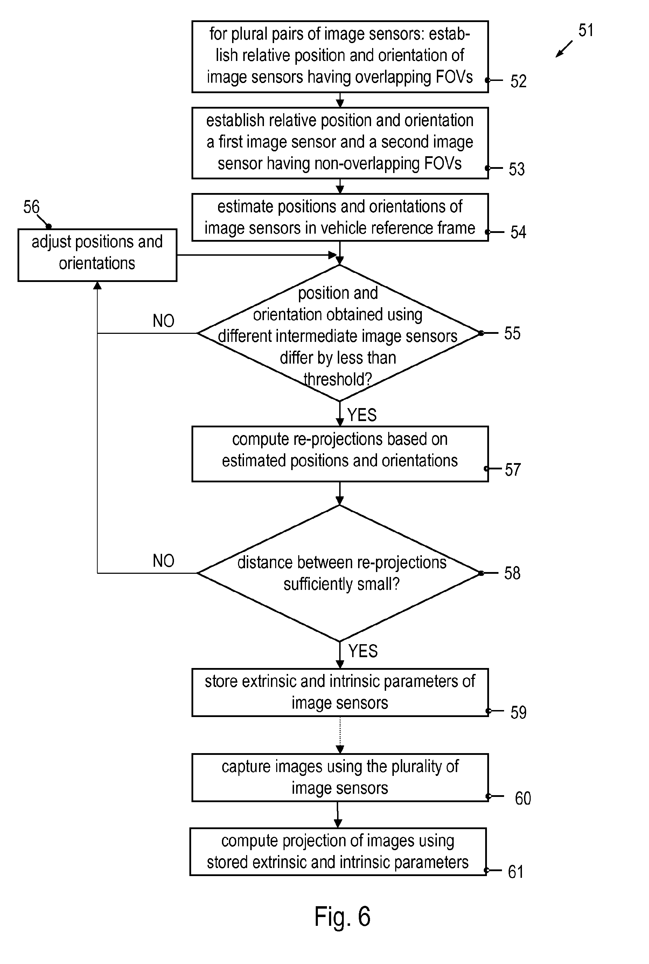

Fig. 6 is a flow chart of a method performed by the vehicle vision system. The method 51 includes a calibration method at 52-59. Results of the calibration may be stored for subsequent use in generating surround view images at 60 and 61.

At 52, the relative position and orientation between an image sensor and a further image sensor having overlapping FOVs are determined. The relative position and orientation may respectively be determined for plural pairs of image sensors. For each pair of image sensors having overlapping FOVs, an image captured by the image sensor and a further image captured by the further image sensor may be evaluated, which show a plurality of objects such as markings positioned in the overlap region of the FOVs. The intrinsic parameters of the image sensors may also be determined.

At 53, the relative position and orientation of image sensors which have non-overlapping FOVs are established. The relative positions and orientations established for plural pairs of image sensors having overlapping FOVs may be used to establish the relative position and orientation of image sensors which have non-overlapping FOVs

At 54, the positions and orientations of the image sensors may be estimated in a vehicle reference frame. The known position and orientation of one image sensor relative to the vehicle reference frame may be used to determine the positions and orientations in the vehicle reference frame.

For a surround view system, the position and orientation of at least one image sensor may be determined using images captured by different pairs of image sensors. For illustration, in calibration, the position and orientation of image sensor 12 of the vehicle vision system of Figs. 1-3 may be determined using relative positions and orientations between image sensors of pair 41 and of pair 42, or using relative positions and orientations between image sensors of pair 43 and of pair 44.

At 55, it is determined whether the extrinsic parameters estimated at 54 are independent of the images evaluated to obtain the extrinsic parameters. Step 55 may be performed selectively only for the position and orientation of an image sensor which has a non-overlapping FOV with a reference image sensor.

If it is determined that the position and orientation of an image sensor estimated using data from different pairs of image sensors differs by more than a threshold, the method proceeds to 56. At 56, the position and orientation of at least one of the image sensors is adjusted. The method reverts to 55. The consistency of the extrinsic parameters may be improved in an iterative manner.

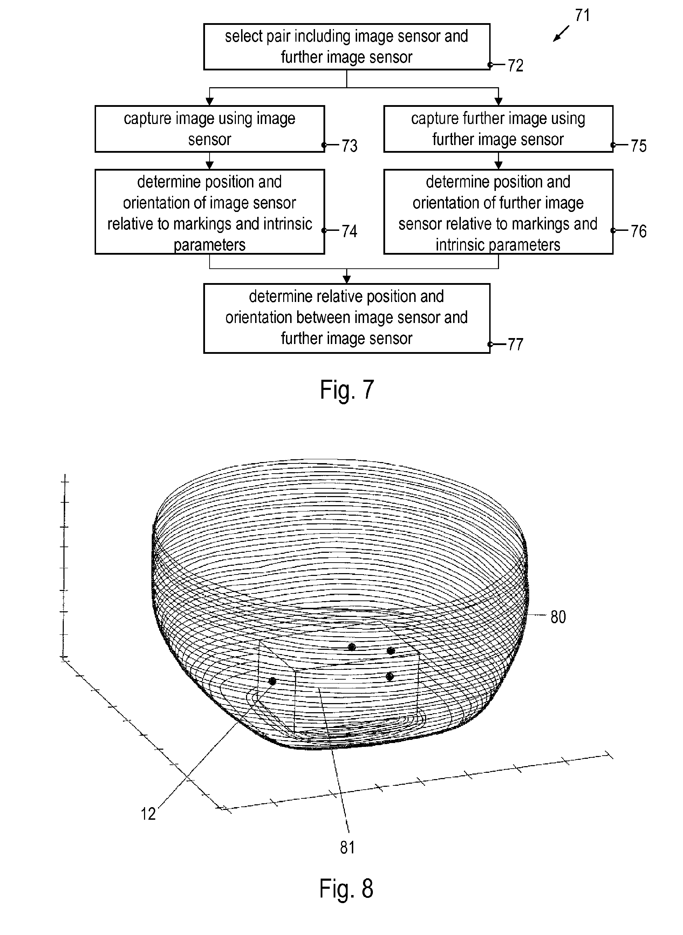

If it is determined that the position and orientation of an image sensor estimated using data from different pairs of image sensors meets a consistency criterion, the method proceeds to 57. At 57, the re-projections of the same plurality of objects recorded by different image sensors is computed. The re-projections may be computed for a projection surface as explained with reference to Fig. 8 below. The re-projections are computed using the extrinsic parameters previously estimated or adjusted.

At 58, the positions of points in the re-projection are compared to each other. The positions may be the positions of markings, such as corners of a checkerboard, in the re-projection. The positions of the re-projection computed for one image sensor which has captured an image of the objects and for a further image sensor which has captured the further image of the objects are compared to each other. If the positions do not fulfil a given consistency criterion, such as a threshold comparison, the method proceeds to 56. Steps 55-58 are repeated with adjusted extrinsic parameters.

If it is determined that the re-projections fulfil the given consistency criterion, the method proceeds to 59.

At 59, the determined extrinsic parameters of the vehicle vision system are stored. If intrinsic parameters of the various image sensors are also determined at 52, the intrinsic parameters may also be stored.

The image processing unit of the vehicle vision system is configured to subsequently use the extrinsic and intrinsic parameters of the vehicle vision system. For illustration, when the vehicle vision system is subsequently used to visually output a section of a surround view to a user, the image processing unit may process images captured by the various image sensors and may compute the surround view using the extrinsic and intrinsic parameters.

In use of the vehicle vision system for outputting an image to the user, at 60, images may be captured using the plurality of image sensors. At 61, a projection of the images onto a projection surface may be computed. The projection may be computed using the extrinsic parameters of the vehicle vision system and the intrinsic parameters of the image sensors.

An optical output device may be controlled to output a section of the projection to the user. The section may be selected by a user via an input interface.

Steps 60 and 61 may be performed a large number of times during on-going use of the vehicle vision system, respectively based on the parameters of the vision system determined and stored in the calibration method.

Fig. 7 is a flow chart of a procedure 71 used to establish the relative position and orientation between an image sensor and a further image sensor which have an overlapping FOV. The procedure may be used to implement step 52 of the method 51. The procedure may be performed by the vehicle vision system.

At 72, a pair of image sensors including an image sensor and a further image sensor is selected. The pair is selected such that the image sensors have overlapping FOVs. A plurality of objects having pre-defined positions relative to each other is positioned in the overlap region of the FOV. The plurality of objects may include patterns or other markings arranged on three mutually orthogonal planes of a trihedron.

At 73, an image is captured using the image sensor. Image processing is performed to determine image coordinates of the plurality of objects. For a checkerboard pattern, edge detections schemes may be used. At 74, the position and orientation of the image sensor relative to a coordinate system of the plurality of objects is determined. The intrinsic parameters of the image sensor may be determined. The intrinsic parameters may describe the non-linear distortions caused by the optical components of the image sensor.

At 75, a further image is captured using the further image sensor. Image processing is performed to determine image coordinates of the plurality of objects. For a checkerboard pattern, edge detections schemes may be used. At 76, the position and orientation of the further image sensor relative to the coordinate system of the plurality of objects is determined. The intrinsic parameters of the further image sensor may be determined. The intrinsic parameters may describe the non-linear distortions caused by the optical components of the further image sensor.

At 77, the relative position and orientation between the image sensor and the further image sensor are determined based on the results of 74 and 76.

Both in the calibration method and when generating a surround view from images captured by different image sensors, the image processing unit 10 may compute a projection of images or sections thereof onto a projection surface.

Fig. 8 is a schematic view of a projection surface 80 which may be used both in calibration and when computing a surround view based on the results of the calibration.

The fused images of plural cameras may be projected onto the projection surface 80. The projection surface 80 has a bowl-type shape. The surface 80 has a planar bottom, which may correspond to the ground plane of the vehicle 1. The planar bottom of the projection surface 80 may have a rectangular form. An aspect ratio of the planar bottom of the projection surface 80 may be selected based on a ratio between length and width of the vehicle. A cuboid 81 represents the vehicle. Full circles represent the positions of image sensors on the vehicle.

Using such a projection surface 80, points located in the vehicle surroundings may be correctly visualized in the surround view generated by the image processing unit. The special shape of the projection surface provides a high quality visual perception for the user. For illustration, the projection surface 80 has a flat bottom. Points located at ground plane level of the vehicle are projected onto the flat lower part of the projection surface 80. This has the effect that points which are located on the ground plane level, such as road markings, will be correctly mapped.

Methods and vehicle vision systems according to embodiments have been described with reference to the drawings. Modifications and alterations may be implemented in other embodiments.

For illustration, while image sensors having a fisheye lens may be used in the vehicle vision system, other wide-angle image sensors may also be used. The image sensors may produce images having various types of distortions, such as non-linear radial distortions or non-linear barrel distortions.

For further illustration, the vehicle vision system does not need to cover the full 360˚ angular range around the vehicle.

For further illustration, while the parameters of a polynomial model for the non-linear distortion of the image sensors may be determined in the calibration, other models may be used to described the image sensors. Examples for such models include non-polynomial models of fisheye distortion, the FOV model or the perspective model. The parameters of these models may also be determined in the calibration procedure.

For further illustration, while relative positions and orientations may be determined using matrix and vector manipulation techniques, a wide variety of processing options is available for determining the position and orientation of an image sensor relative to a trihedron coordinate system and/or for determining relative positions and orientations between image sensors.

Embodiments of the invention may be used for surround view system, without being limited thereto.

**Claims**

1. A method of calibrating a vehicle vision system, said vehicle vision system comprising a plurality of image sensors (11-14) which respectively capture images (45, 46) having a non-linear distortion, in particular a fish-eye distortion, and which are provided at different locations on said vehicle (1),
said method comprising the following steps performed for a pair (41-44) of image sensors including an image sensor (11) and a further image sensor (12) of said plurality of image sensors (11-14):

   capturing an image (45) of a plurality (22) of objects using said image sensor (11) and capturing a further image (46) of said plurality (22) of objects using said further image sensor (13), said plurality (22) of objects being positioned in an overlap region (21) of a field of view (15) of said image sensor (11) and a field of view (17) of said further image sensor (13);
   determining a position and orientation of said image sensor (11) relative to said plurality (20) of objects based on said captured image (45) and a position and orientation of said further image sensor (13) relative to said plurality (22) of objects based on said captured further image (46); and
   establishing a relative position and orientation between said further image sensor (13) and said image sensor (11) based on a result of said determining.

2. The method of claim 1,
wherein said capturing, determining and establishing steps are respectively performed for a plurality of pairs (41-44) of image sensors (11-14) having overlapping fields of view (15-18).

3. The method of claim 2, wherein a pair (41) of said plurality of pairs includes a first image sensor (11) and an intermediate image sensor (13), and wherein another pair (42) of said plurality of pairs includes said intermediate image sensor (13) and a second image sensor (12), said method further comprising:

   establishing a relative position and orientation between said second image sensor (12) and said first image sensor (11) based on a result of said establishing step obtained for said pair (41) and a result of said establishing step obtained for said other pair (42).

4. The method of claim 3, wherein said capturing, determining and establishing steps are respectively performed for each pair of a further plurality of pairs (43, 44) of image sensors,
wherein said relative position and orientation between said second image sensor (12) and said first image sensor (11) are established based on results of said establishing step obtained for said further plurality of pairs (43, 44).

**5.** The method of claim 4, further comprising:

comparing

- said relative position and orientation between said second image sensor (12) and said first image sensor (11) computed based on results of said establishing step obtained for said plurality of pairs (41, 42) and
- said relative position and orientation between said second image sensor (12) and said first image sensor (11) computed based on results of said establishing step obtained for said further plurality of pairs (43, 44).

**6.** The method of any one of claims 3-5,
wherein a field of view (15) of said first image sensor (11) and a field of view (16) of said second image sensor (12) are disjoint.

**7.** The method of any one of claims 3-6,
wherein said first image sensor (11) and said second image sensor (12) are provided at opposite sides of said vehicle (1).

**8.** The method of any one of claims 2-7, further comprising:

determining extrinsic parameters of said plurality of image sensors (11-14) in a vehicle reference frame based on results of said establishing step obtained for said plurality of pairs (41-44).

**9.** The method of claim 8,
wherein determining said extrinsic parameters in said vehicle reference frame includes computing projections of said plurality of objects (22-29; 31).

**10.** The method of claim 8 or claim 9,
wherein said vehicle vision system is a surround view system and said determined extrinsic parameters are used to compute a surround view based on images (45, 46) captured by said plurality of image sensors (11-14).

**11.** The method of any one of the preceding claims,
wherein said plurality of objects (31) includes at least three objects located on a first plane (32) and at least three objects located on a second plane (33), said first plane (32) and said second plane (33) being arranged at an angle relative to each other.

**12.** The method of claim 11,
wherein said plurality of objects (31) includes at least three objects located on a third plane (34), wherein said first plane (32), said second plane (33) and said third plane (34) are mutually orthogonal.

**13.** The method of any one of the preceding claims, wherein intrinsic parameters of said image sensor (11) are established based on said image (45), and wherein intrinsic parameters of said further image sensor (12) are established based on said further image (46).

**14.** The method of any one of the preceding claims,
wherein said image sensors (11-14) respectively include a fisheye lens, and
wherein at least two of said image sensors (13, 14) are provided at side door mirrors of said vehicle (1).

**15.** A vehicle vision system, comprising:

a plurality of image sensors (11-14) respectively having an electrooptical component to capture images (45, 46) having a non-linear distortion, said image sensors (11-14) being provided at different locations on said vehicle (1); and
an image processing unit (10) configured to process image data captured by said plurality of image sensors (11-14), said image processing unit being (10) configured to:

identify a plurality of objects (22) included both in an image (45) captured by an image sensor (11) and in a further image (46) captured by a further image sensor (12);
determine a position and orientation of said image sensor (11) relative to said plurality of objects (22) based on said captured image (45) and a position and orientation of said further image sensor (13) relative to said plurality of objects (22) based on said captured further image (46); and

establish a relative position and orientation between said further image sensor (13) and said image sensor (11) based on said determined position and orientation of said image sensor (11) relative to said plurality of objects (22) and said determined position and orientation of said further image sensor (13) relative to said plurality of objects (22).

Fig. 1

Fig. 2

Fig. 3

Fig. 4

Fig. 5

for plural pairs of image sensors: establish relative position and orientation of image sensors having overlapping FOVs — 52

establish relative position and orientation a first image sensor and a second image sensor having non-overlapping FOVs — 53

estimate positions and orientations of image sensors in vehicle reference frame — 54

56
adjust positions and orientations

position and orientation obtained using different intermediate image sensors differ by less than threshold? — 55

NO

YES

compute re-projections based on estimated positions and orientations — 57

distance between re-projections sufficiently small? — 58

NO

YES

store extrinsic and intrinsic parameters of image sensors — 59

capture images using the plurality of image sensors — 60

compute projection of images using stored extrinsic and intrinsic parameters — 61

51

Fig. 6

select pair including image sensor and
further image sensor —72

capture image using image
sensor —73

capture further image using
further image sensor —75

determine position and
orientation of image sensor
relative to markings and intrinsic
parameters —74

determine position and
orientation of further image
sensor relative to markings and
intrinsic parameters —76

determine relative position and
orientation between image sensor and
further image sensor —77

71

Fig. 7

80

12

81

Fig. 8

EUROPEAN SEARCH REPORT

Application Number

EP 11 16 8355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/115922 A1 (SHIMIZU SEIYA [JP]) 19 May 2011 (2011-05-19) | 1-10,14, 15 | INV. G06T7/00 |
| Y | * paragraph [0037] - paragraph [0160] * ----- | 11-13 | |
| Y | US 2008/231710 A1 (ASARI KEISUKE [JP] ET AL) 25 September 2008 (2008-09-25) * paragraph [0052] - paragraph [0082] * ----- | 1-15 | |
| Y | US 2002/027651 A1 (JACKSON DAVID A [US] ET AL) 7 March 2002 (2002-03-07) * paragraph [0046] * * paragraph [0051] * * paragraph [0053] * ----- | 1-15 | |
| Y | PEDERSINI F ET AL: "Accurate and simple geometric calibration of multi-camera systems", SIGNAL PROCESSING, ELSEVIER SCIENCE PUBLISHERS B.V. AMSTERDAM, NL, vol. 77, no. 3, 1 September 1999 (1999-09-01), pages 309-334, XP004179213, ISSN: 0165-1684, DOI: 10.1016/S0165-1684(99)00042-0 * page 318 - page 322 * ----- | 1-15 | TECHNICAL FIELDS SEARCHED (IPC) G06T |
| Y | KEITH FORBES, ANTHON VOIGT, NDIMI BODIKA: "An Inexpensive, Automatic and Accurate Camera Calibration Method", PROCEEDINGS OF THE THIRTEENTH ANNUAL SOUTH AFRICAN WORKSHOP ON PATTERN RECOGNITION, 2002, XP002661087, * section 1: Introduction * * figures 1,2 * ----- | 11,12 | |

The present search report has been drawn up for all claims

| Place of search | Date of completion of the search | Examiner |
|---|---|---|
| Munich | 27 October 2011 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 16 8355

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2011

| Patent document cited in search report | | Publication date | Patent family member(s) | Publication date |
|---|---|---|---|---|
| US 2011115922 | A1 | 19-05-2011 | EP 2339535 A1<br>JP 2011107990 A<br>KR 20110055412 A | 29-06-2011<br>02-06-2011<br>25-05-2011 |
| US 2008231710 | A1 | 25-09-2008 | CN 101236654 A<br>EP 1968011 A2<br>JP 2008187566 A | 06-08-2008<br>10-09-2008<br>14-08-2008 |
| US 2002027651 | A1 | 07-03-2002 | NONE | |

For more details about this annex : see Official Journal of the European Patent Office, No. 12/82